# EUROPÄISCHE PATENTSCHRIFT

(11) **EP 1 364 846 B1**
(45) Veröffentlichungstag und Bekanntmachung des Hinweises auf die Patenterteilung: **31.08.2005**
(21) Anmeldenummer: 03005571.9
(22) Anmeldetag: 12.03.2003
(51) Int. Cl.: B60R 21/34, B62D 25/10

(54) **Energieabsorbierendes Karosserieteil, insbesondere Fronthaube, für ein Fahrzeug, insbesondere Kraftfahrzeug**
Energy absorbing body part, especially bonnet, for a vehicle
Pièce de carrosserie à absorption d'énergie, en particulier capot, pour un véhicule

(30) Priorität: 22.05.2002 DE 10222512
(43) Veröffentlichungstag der Anmeldung: 26.11.2003
(73) Patentinhaber: Volkswagen AG, 38436 Wolfsburg (DE)
(72) Erfinder: Sinnhuber, Ruprecht, 38518 Gifhorn (DE); Oehlerking, Conrad, 38527 Meine (DE); Wohllebe, Thomas, 38547 Calberlah (DE)
(74) Vertreter: Liebl, Thomas

(56) Entgegenhaltungen:
- DE-A- 10 014 832
- DE-A- 10 022 094
- DE-A- 10 038 812
- DE-A- 19 948 181

## Beschreibung

Die Erfindung betrifft ein energieabsorbierendes Karosserieteil, insbesondere Fronthaube, für ein Fahrzeug, insbesondere Kraftfahrzeug, nach dem Anspruchs 1.

Mit derartigen energieabsorbierenden Karosserieteilen soll erreicht werden, dass der Aufprallschutz für einen Aufprallbeteiligten erhöht wird. Insbesondere bei Fronthauben soll die Schwere von Beeinträchtigungen von Fußgängern, Radfahrern oder dergleichen, reduziert werden, die im Falle einer Kollision auf die Fronthaube geschleudert werden.

Karosserieteile, die eine äußere und eine innere Wandung aufweisen, wie Fronthauben und Seitentüren, werden üblicherweise energieabsorbierend ausgeführt, um bei einem Aufprall eine gezielte Umsetzung von Aufprallenergie in Verformungsarbeit zu erreichen, z. B. durch Ausbildung von Soll-Knickstellen, die eine vorbestimmte Verformung unter Energieaufnahme herbeiführen. Aus der DT 23 64 200 A1 ist die Ausbildung von hohlräumigen, explosionsartig aufwölbbaren Deformationsgliedern an vorbestimmten Bereichen der Innenseite der äußeren Wandung bekannt, um deren Beul- und Knickfestigkeit und damit deren Energieaufnahmevermögen bei einem Aufprall zu erhöhen.

Aus der DE 196 15 744 C1 ist ein energieabsorbierendes Karosserieteil für ein Kraftfahrzeug bekannt, das eine im montierten Zustand dem Fahrzeugaufbau zugewandte Innenwand und eine mit dieser verbindbare Außenwand als von außen sichtbare Sichtwand aufweist, wobei im Bereich zwischen der Innenwand und der Außenwand wenigstens ein Mittel vorgesehen ist, das die Außenwand im Falle eines Aufpralls auf das Karosserieteil wenigstens bereichsweise von der Innenwand weg in eine abgehobene Aufprallposition abhebt. Konkret ist hier einem vorbestimmten Außenwandbereich eine Aufblasvorrichtung zugeordnet, durch die der Außenwandbereich im Falle eines bevorstehenden oder erfolgenden Aufpralls dem Aufprallbeteiligten entgegenverlagerbar ist. Der Außenwandbereich ist hierzu gegenüber der übrigen Außenwand des Karosserieteils geschwächt und plastisch verformbar. Auf der Innenseite des Außenwandbereichs ist eine wenigstens die Stabilität der übrigen Außenwand aufweisende und den Aufprallbereich umschließende Stützschale angeordnet, die fest mit der Außenwand verbunden ist und mit dieser einen Hohlraum ausbildet, in dem eine pyrotechnische Treibladung untergebracht ist. Durch die Aufwölbung des Aufprallbereiches nach außen wird ein zeitiger energieverzehrender Kontakt des Aufprallbeteiligten mit der Fahrzeugkarosserie erzielt, bevor dieser mit den massiven Teilen des Fahrzeugs in Berührung kommt. Im Hinblick auf ein komplexes Unfallgeschehen ist es jedoch nicht sicher, dass der Aufprallbeteiligte tatsächlich auf den vorbestimmten Außenwandbereich aufprallt. Zudem ist ein derartiger Aufbau des Karosserieteils insgesamt relativ aufwendig in der Herstellung und dadurch wenig praktikabel. Problematisch bei einem derartigen Karosserieteil, insbesondere in Verbindung mit Fronthauben, ist jedoch, dass diese im Hinblick auf ihre Auslegung als energieabsorbierende Karosserieteile, oftmals nicht mehr die erforderliche Steifigkeit aufweisen.

Aus der DE 100 22 094 A1 ist eine Fronthaube mit einer äußeren Wandung und einer am Fahrzeugaufbau abgestützten inneren Wandung bekannt, bei der zwischen den beiden Wandungen aufblasbare Kammern ausgebildet sind. Die Kammern weisen deformierbare Kammerwände auf und werden über einen Gasleitungskanal mit Gas beaufschlagt. Bei einem Aufprall wird das durch den Gasgenerator freigesetzte Gas in die Kammern gedrückt, wodurch die Kammerwände auseinandergedrückt und dabei gestreckt werden. In die Kammern können für diesen Zweck auch Airbags eingesetzt werden.

Weiter ist aus der DE 100 14 832 A1 ein Sicherheitssystem für Kraftfahrzeuge in Verbindung mit einer Fronthaube bekannt, bei der mittels einer Airbageinrichtung die Fronthaube in einem hinteren, der Windschutzscheibe zugewandten Fronthaubenbereich angehoben wird.

Ferner sind weitere Lösungen zum Schutz eines Aufprallbeteiligten bekannt, bei denen die gesamte Motorhaube mittels einer Airbagvorrichtung nach oben in eine Aufprallposition anhebbar ist (DE 28 14 107 A1). Weiter sind auch Lösungen bekannt, bei denen in der Motorhaube wenigstens ein Airbag vorgesehen ist, der sich bei einem Aufprall dem Aufprallpartner entgegenentfaltet (JP 07 156 749 A, JP 07 125 603 A, JP 07 125 605 A, JP 07 125 606 A).

Es ist Aufgabe der Erfindung, ein alternatives energieabsorbierendes Karosserieteil, insbesondere Fronthaube, für ein Fahrzeug, insbesondere Kraftfahrzeug, zu schaffen, das einfach und praktikabel aufgebaut ist und mit dem der Aufprallschutz für einen Aufprallbeteiligten relativ hoch ist.

Diese Aufgabe wird gelöst mit den Merkmalen des Anspruchs 1.

Mit einem derartigen Aufbau, bei dem die Innenwand durch einen Versteifungsrahmen versteift ist, wird auf einfache Weise die erforderliche Steifigkeit der Haube erhalten. In einer besonders vorteilhaften Doppelfunktion können dabei wenigstens Teile des Versteifungsrahmens auch zur Gasführung verwendet werden, wodurch sich eine vorteilhafte Bauteilreduzierung ergibt. Zudem können Karosserieteile durch diese Bauteilreduzierung insgesamt auch relativ kompakt ausgebildet werden.

Eine Gasquelle, z. B. ein Gasgenerator, kann dabei direkt in den Hohlprofilbereich des Versteifungsrahmens einblasen oder aber auch entfernt vom Versteifungsrahmen am Fahrzeugaufbau angeordnet sein und mit dem Versteifungsrahmen z. B. über eine Gaslanze strömungsverbunden sein. Ebenso ist eine derartige Strömungsverbindung des Airbags mit dem Versteifungsrahmen im Hohlprofilbereich direkt oder mittelbar über eine Gaslanze oder dergleichen möglich.

Durch die Verbindung bzw. Integration des Versteifungsrahmens mit der bzw. in die Innenwand wird weiterhin erreicht, dass die Außenwand von der Innenwand in einer vorteilhaften Weise schnell und einfach abgehoben werden kann. Zudem kann die Außenwand dann nach wie vor weniger steif ausgebildet werden als die Innenwand, so dass dadurch auch die Aufprallenergie eines Aufprallbeteiligten bei einem Aufprall auf die abgehobene Außenwand in höherem Maße absorbiert werden kann. Des weiteren bleibt die äußere Gestaltung der Außenwand durch die Integration bzw. Verbindung des Versteifungsrahmens mit der Innenwand unverändert, so dass eine vorteilhafte Designneutralität von außen her gegeben ist, die auch die Dimensionierung des Fahrzeugs nicht beeinflußt.

Grundsätzlich kann der Versteifungsrahmen dabei lediglich in bestimmten Bereichen bezogen auf die Innenwand vorgesehen sein. Besonders vorteilhaft ist jedoch ein Aufbau, bei dem der Versteifungsrahmen randseitig vollständig umlaufend ausgebildet ist, insbesondere in Verbindung mit einer Fronthaube als Karosserieteil, da dann den einzelnen Versteifungsrahmenteilbereichen z. B. wenigstens ein Scheibenairbag, wenigstens ein vorderer Haubenkantenairbag sowie wenigstens ein seitlicher Fugenairbag zugeordnet werden kann, die über den gleichzeitig eine Gasführung bildenden Versteifungsrahmen auf einfache Weise schnell und funktionssicher aufgeblasen werden können. Dazu sind im Bereich des Verstreifungsrahmens an den entsprechenden Anbindungsstellen der Airbags in bekannter Weise übliche Gasverbindungsmittel zum Airbag hin vorzusehen. Grundsätzlich ist es jedoch auch möglich, lediglich in bestimmten Bereichen des Karosserieteils einen oder mehrere Airbags vorzusehen und damit lediglich einen Teilbereich des Versteifungsrahmens als Hohlprofil zur Gasführung auszubilden.

Gemäß einer bevorzugten Ausführungsform der Erfindung ist vom Versteifungsrahmen ausgehend wenigstens ein Abzweigungsrahmenteil vom Innenwand-Randbereich weg nach innen in Richtung mittlerer Innenwandbereich abgezweigt, wobei das Abzweigungsrahmenteil in der Art einer Gaslanze mit wenigstens einem Anhebe-Airbag als Mittel zum Abheben der Außenwand strömungsverbunden ist. Besonders bevorzugt sind mehrere in Längsrichtung und/oder Querrichtung vorzugsweise in etwa parallel über das Karosserieteil verlaufende Abzweigungsrahmenteile vom randseitigen Versteifungsrahmen abgezweigt, die jeweils mit wenigstens einem Anhebe-Airbag strömungsverbunden sind. Die Anhebe-Airbags und entsprechend zugeordnete Abzweigungsrahmenteile sind dabei so angeordnet und/oder ausgebildet, dass je nach gewünschtem Einsatzfall die Außenwand entweder parallel zur Innenwand abhebbar ist oder dass die Außenwand auf einer Karosserieteilseite höher abhebbar ist als auf einer gegenüberliegenden Karosserieteilseite, d. h. verschwenkt werden kann. Letzteres ist insbesondere in Verbindung mit einer Fronthaube von Vorteil, da sich hierdurch sehr gute Ergebnisse hinsichtlich der Energieabsorption eines Aufpralls erzielen lassen.

Jedem der Abzweigungsrahmenteile kann dabei jeweils ein Anhebe-Airbag zugeordnet sein, der das Abzweigungsrahmenteil ummantelt, wobei am Abzweigungsrahmenteil wenigstens eine Gasaustrittsöffnung vorgesehen ist, über die Gas in die entsprechend zugeordneten Anhebe-Airbags einleitbar ist. Ein derartiger Aufbau weist eine hohe Funktionssicherheit auf und ist mit einfachen Mitteln herstellbar. Zudem ist ein derartiger Aufbau platzsparend realisierbar.

Besonders bevorzugt sind die Anhebe-Airbags dabei mitsamt zugeordnetem Abzweigungsrahmenteil im montierten Zustand des Karosserieteils in entsprechend im Zwischenbereich zwischen der Innenwand und der Außenwand ausgebildeten Aufnahmeräumen aufgenommen. Mit derartigen definierten Aufnahmeräumen ist eine einfache Anbringung und Verstauung der Anhebe-Airbags mitsamt der Abzweigungsrahmenteile insbesondere im Rahmen der Montage möglich. Je nach konkret gegebener Situation können dabei die Aufnahmeräume entweder in der Innenwand oder in der Außenwand ausgebildet sein, oder aber auch in der Innenwand und in der Außenwand. Bevorzugt ist jedoch die Ausbildung in der Innenwand, insbesondere im Hinblick auf die optische Gestaltung der Außenwand als Sichtteil.

Als Gasquelle ist wenigstens ein ein- oder mehrstufiger Gasgenerator vorgesehen, über dem der Versteifungsrahmen und damit der oder die Airbags mit Gas beaufschlagbar ist. Der wenigstens eine Gasgenerator ist dabei vorzugsweise am Versteifungsrahmen und/oder an der Innenwand des Karosserieteils festgelegt. Die Festlegung des Gasgenerators am Versteifungsrahmen und/oder an der Innenwand ist zudem deswegen vorteilhaft, da im Gegensatz zur Anbringung an der Außenwand der Gasgenerator dann nicht zusammen mit der Außenwand abgehoben werden muß, was wiederum eine komplizierte Anschlußtechnik in Verbindung mit der Gasversorgung bewirken kann.

Gemäß einer besonders bevorzugten Ausgestaltung der Erfindung weist der Versteifungsrahmen wenigstens bereichsweise ein im Querschnitt gesehen doppelwandiges U-Profil mit einem von außen gesehen zwischen den U-Schenkeln liegenden Aufnahmeraum auf, in dem ein Airbag im zusammengefalteten Zustand aufgenommen werden kann. Im Bereich des Aufnahmeraums ist dabei wenigstens eine Gasverbindung zum Airbag zu dessen Gasbefüllung vorgesehen. Besonders bevorzugt ist hierbei zudem der Aufnahmeraum in Airbag-Entfaltungsrichtung ausgerichtet angeordnet. D. h., dass z. B. in Verbindung mit einem randseitig umlaufenden Versteifungsrahmen der Aufnahmeraum im Bereich der vorderen Haubenkante in Richtung Fahrzeugfrontend, im Bereich der Kotflügel in Richtung zu den Kotflügeln und im Bereich der Windschutzscheibe in Richtung zu der Windschutzscheibe hin ausgerichtet ist. Dadurch kann der jeweils zugeordnete Airbag besonders schnell und funktionssicher in der gewünschten Position aufgeblasen werden.

Ein derartiger Versteifungsrahmen wird vorteilhaft so hergestellt, dass ein im wesentlichen einen zylindrischen Querschnitt aufweisender Rohrabschnitt so eingestülpt wird, dass der Rohrabschnitt im Querschnitt gesehen ein doppelwandiges U-Profil ausbildet mit einem Aufnahmeraum zwischen den U-Schenkeln. Anschließend kann dann noch im Bereich des Aufnahmeraums von außen her gesehen wenigstens eine Gasaustrittsöffnung vorgesehen werden, z. B. durch Bohren. Das Einstülpen kann über eine mittels einer entsprechenden Vorrichtung auf den zylindrischen Rohrabschnitt aufbringbaren Stülpkraft erfolgen. Der Rohrabschnitt kann einen kreisrunden, einen runden, einen viereckigen oder dergleichen geschlossenen zylindrischen Querschnitt aufweisen.

Die Innenwand und die Außenwand des Karosserieteils liegen im montierten Zustand wenigstens bereichsweise in einer Anlageverbindung aneinander an, wobei die Innenwand und die Außenwand zusätzlich wenigstens bereichsweise miteinander verklebt werden können. Ein derartiges Karosserieteil bindet in sich eine kompakte und stabile Einheit, die auf einfache Weise gehändelt und transportiert werden kann, ohne dass die Gefahr besteht, dass sich einzelne Teile ablösen. Dies ist insbesondere in Verbindung mit einer Fronthaube als Karosserieteil vorteilhaft.

In einem bevorzugten Anwendungsfall, bei dem das Karosserieteil eine Fronthaube ist, kann diese ferner in herkömmlicher Weise mittels einer Scharnieranordnung von einer geschlossenen Stellung in eine offene Stellung überführt werden. Dabei wird die mit der Außenwand verbundene Innenwand, d. h. die gesamte Fronthaube in die entsprechend gewünschte Stellung verschwenkt.

Weiter ist besonders vorteilhaft vorgesehen, dass die Auslösung der Mittel zum Anheben der Außenwand und/oder der Gasquelle sensorgesteuert mittels einer Sensoreinrichtung erfolgt. Zur Erfassung einer drohenden Kollision ist die Sensoreinrichtung vorzugsweise als pre-crash-Sensoreinrichtung ausgebildet.

Die Erfindung wird nachfolgend anhand einer Zeichnung näher erläutert.

Es zeigen:
- Fig. 1: eine schematische Prinzipdarstellung einer parallel zur Innenwand abgehobenen Außenwand,
- Fig. 2: eine alternative, schematische Prinzipdarstellung zur Fig. 1 mit schräg gegenüber einer Innenwand verschwenkter Außenwand,
- Fig. 3: eine schematische Querschnittsdarstellung durch einen seitlichen Bereich einer Fronthaube mit von der Innenwand abgehobener Außenwand und Fugenairbag,
- Fig. 4: eine schematische Draufsicht auf eine mit einem Versteifungsrahmen verstärkte Innenwand einer Fronthaube,
- Fig. 5: eine schematische Darstellung einer alternativen Ausführungsform eines Versteifungsrahmens für eine Innenwand,
- Fig. 6: eine schematische Darstellung eines Fahrzeugs mit Fugenairbags, vorderen Haubenkantenairbags und Scheibenairbags,
- Fig. 7: eine schematische Schnittansicht entlang der Linie A-A der Fig. 4 im nicht abgehobenen Zustand der Außenwand,
- Fig. 8: eine schematische Schnittansicht entlang der Linie A-A der Fig. 4 im abgehobenen Zustand der Außenwand,
- Fig. 9: eine schematische Schnittdarstellung entlang der Linie B-B der Fig. 4 im nicht abgehobenen Zustand der Außenwand,
- Fig. 10: eine schematische Schnittansicht entlang der Linie B-B der Fig. 4 im abgehobenen Zustand der Außenwand,
- Fig. 11: eine schematische Schnittansicht entlang der Linie C-C der Fig. 4 im nicht abgehobenen Zustand der Außenwand,
- Fig. 12: eine schematische Schnittansicht entlang der Linie C-C der Fig. 4 im abgehobenen Zustand der Außenwand, und
- Fig. 13: eine schematische Schnittansicht entlang der Linie B-B der Fig. 4mit einer alternativen Ausführungsform.

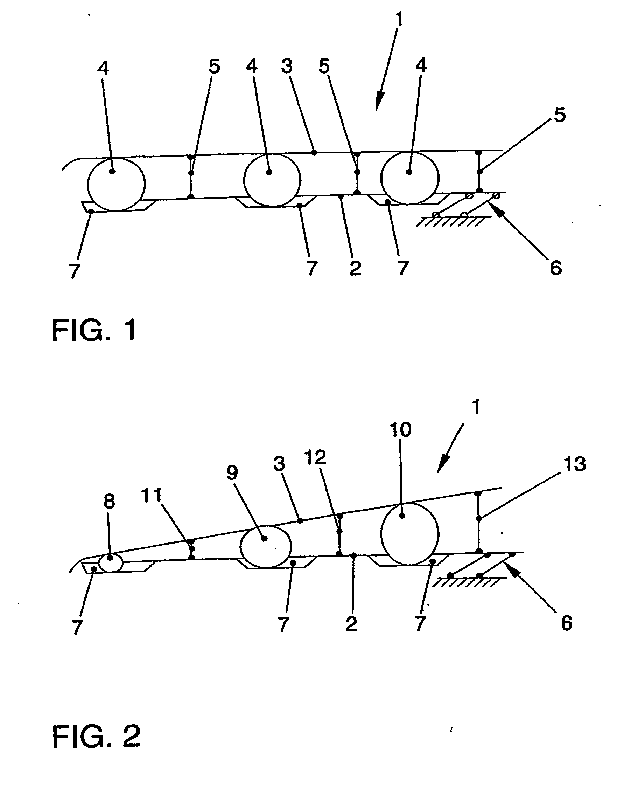

In der Fig. 1 ist schematisch eine Prinzipdarstellung einer Fronthaube 1 als energieabsorbierendes Karosserieteil gezeigt, das aus einer Innenwand 2 und einer Außenwand 3 aufgebaut ist. Im in der Fig. 1 nicht gezeigten Grundzustand ist die Innenwand 2 mit der Außenwand 3 in einer Anlageverbindung verbunden. Im Zwischenbereich zwischen der Innenwand 2 und der Außenwand 3 sind hier Airbags 4 vorgesehen, die im Falle eines mittels einer hier nicht dargestellten Sensoreinrichtung sensierten bevorstehenden Aufpralls auf die Fronthaube 1 aufgeblasen werden, um die Außenwand 3 von der Innenwand 2 abzuheben. Im in der Fig. 1 dargestellten Fall sind die Airbags 4 beispielhaft als sich in Fahrzeugquerrichtung über die Fronthaube 1 erstreckende und jeweils von der Größe her gleich ausgebildete Airbags ausgebildet, die die Außenwand 3 parallel zur Innenwand 2 abheben. Die Außenwand 3 wird im abgehobenen Zustand über Haltemittel 5 an der Innenwand 2 gehalten, um einerseits den Abhebeweg der Außenwand 3 in eine vorgegebene, definierte, maximale Aufprallposition zu begrenzen und andererseits die Außenwand 3 auch in der abgehobenen Position definiert an der Innenwand 2 zu halten. Wenigstens ein Teil dieser Haltemittel 5 ist gleichzeitig auch als Energieabsorptionsmittel ausgebildet, das bei einem Aufprall auf die abgehobene Außenwand 3 Aufprallenergie absorbiert, wobei das Anheben der Außenwand 3 von diesen Haltemitteln 5 bis in die definierte, maximale Aufprallposition ohne Behinderung freigegeben wird. Bei einem Aufprall eines z. B. Fußgängers auf die Fronthaube 1 kann dann über die Airbags und die Haltemittel 5 als Energieabsorptionsmittel sowie auch durch den durch das Abheben der Außenwand 3 von der Innenwand 2 nach unten in Richtung Fahrzeugaufbau gewonnenen Deformationsraum eine vorteilhafte Aufprallenergie-Absorption erzielt werden, die die Gefahr von Beeinträchtigungen des Unfallopfers erheblich reduzieren kann. Wie dies in der Fig. 1 schematisch durch die Scharnieranordnung 6 gezeigt ist, kann die Fronthaube 1 im nicht abgehobenen Zustand der Außenwand 3 von der Innenwand 2 in herkömmlicher und allgemein bekannter Weise über diese Scharnieranordnung zwischen einer Geschlossenstellung und einer Offenstellung verschwenkt werden.

Wie dies der Fig. 1 weiter zu entnehmen ist, können die Airbags 4 dabei in der nicht aktivierten Grundstellung in entsprechend an der Innenwand 2 ausgeformten Aufnahmeräumen 7 aufgenommen sein.

In der Fig. 2 ist ein vom Prinzip her ähnlicher Aufbau wie in der Fig. 1 gezeigt, mit dem Unterschied, dass hier die Airbags 8, 9, 10 sowie auch die Haltemittel 11, 12, 13 so ausgebildet und aufeinander abgestimmt sind, dass die Außenwand 3 gegenüber der Innenwand 2 verschwenkt wird. Die höchste Anhebestelle findet sich dabei vorzugsweise im einer hier nicht dargestellten Windschutzscheibe zugewandten Fronthaubenbereich.

Sowohl in der Darstellung der Fig. 1 als auch in der Darstellung der Fig. 2 ist die Anzahl bzw. die Ausbildung der Airbags und Haltemittel lediglich beispielhaft gezeigt, um das allgemeine Prinzip einer energieabsorbierenden Fronthaube 1 als energieabsorbierendes Karosserieteil zu verdeutlichen.

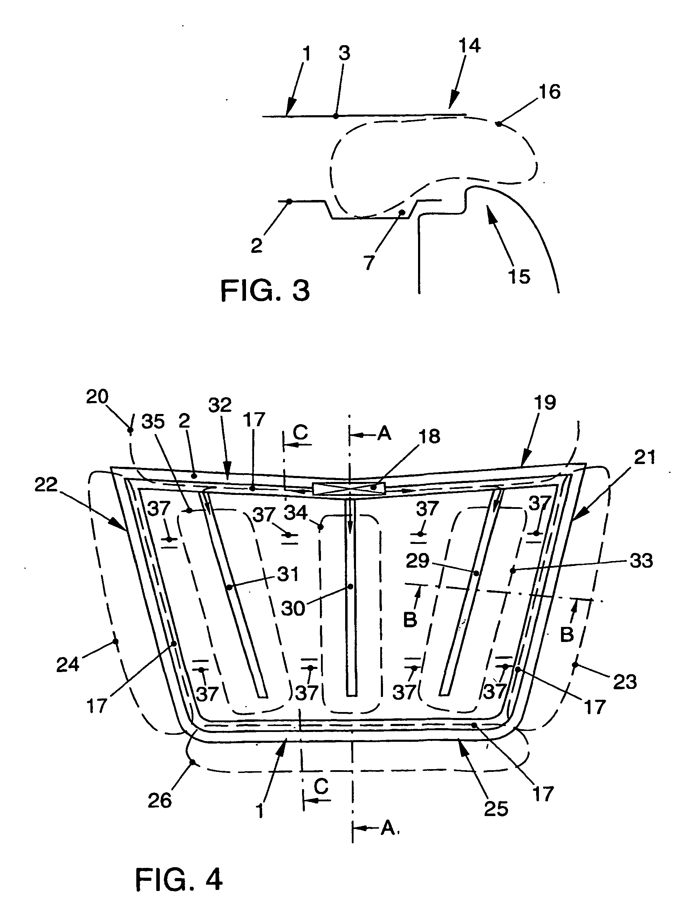

In der Fig. 3 wird schematisch ein Querschnitt durch einen seitlichen Fronthaubenbereich 14 sowie einen seitlichen Kotflügelbereich 15 gezeigt, der anhand eines hier strichliert dargestellten Fugenairbags 16 verdeutlichen soll, dass das Abheben der Außenwand 3 von der Innenwand 2 auch über solche Airbags erfolgen kann, die zusätzlich zu ihrer Abhebefunktion auch eine Schutzfunktion als Fugenairbag 16 übernehmen. Beispielsweise kann an den entsprechenden Stellen der Fronthaube 1 ein derartiges kombiniertes Abheben und Ausüben einer Schutzfunktion auch in Verbindung mit einem vorderen Haubenkantenairbag und/oder einem Windschutzscheibenairbag vorgesehen sein.

In der Fig. 4 ist eine schematische Draufsicht auf eine Innenwand 3 einer Fronthaube 1 gezeigt, die hier mit einem randseitig vollständig umlaufenden Versteifungsrahmen 17 versteift ist. Der Versteifungsrahmen 17 ist hier vollständig als Hohlprofil ausgebildet und zur Gasführung unmittelbar mit einem Gasgenerator 18 als Gasquelle im hinteren Haubenkantenbereich 19 strömungsverbunden. Die Außenwand 3 ist in der Darstellung der Fig. 4 aus Übersichtlichkeitsgründen nicht dargestellt.

Wie dies der Fig. 4 weiter entnommen werden kann, ist der Versteifungsrahmen 17 im Bereich des hinteren Haubenkantenbereichs 19 mit einem Windschutzscheibenairbag 20, in den beiden seitlichen Kotflügelbereichen 21, 22 mit Fugenairbags 23, 24 und im vorderen Haubenkantenbereich 25 mit einem vorderen Haubenkantenairbag 26 strömungsverbunden, die hier strichliert dargestellt sind.

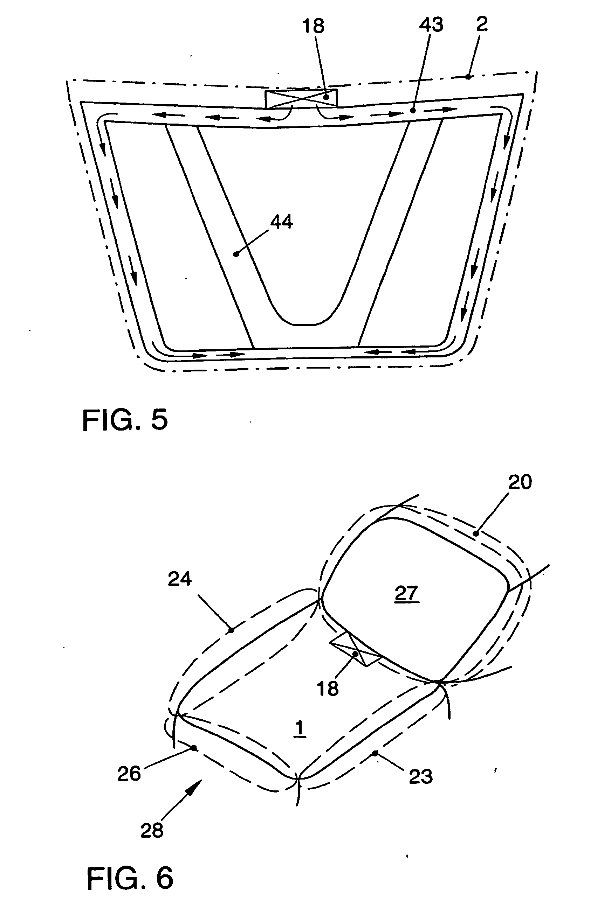

Im Falle eines mit einer hier nicht dargestellten pre-crash-Sensoreinrichtung sensierten bevorstehenden Aufpralls auf die Fronthaube 1 wird der hier beispielhaft gewählte Gasgenerator 18 aktiviert und Gas über den Gasgenerator und den Versteifungsrahmen 17 in den Windschutzscheibenairbag 20, die Fugenairbags 23, 24 und den vorderen Haubenkantenairbag 26 eingeblasen, so dass sich diese, wie dies in der Fig. 4 und in der Fig. 6 schematisch strichliert eingezeichnet ist, jeweils entsprechend zugeordnet vor einer Windschutzscheibe 27, im Bereich der seitlichen Kotflügelbereiche 21, 22 und im Bereich eines Fahrzeugfrontends 28 aufblasen. Die Anzahl der Airbags und auch die Stellen an denen die Airbags aufgeblasen werden, sind hier lediglich beispielhaft gewählt. Selbstverständlich können auch noch mehr Airbags an z. B. auch anderen Stellen der Fronthaube 1 aufgeblasen werden.

Wie dies weiter aus der Fig. 4 ersichtlich ist, sind vom als Gasführungskanal ausgebildeten Versteifungsrahmen 17, d. h. von dem dem hinteren Haubenkantenbereich 19 zugeordneten Versteifungsrahmenbereich hier beispielhaft drei Abzweigungsrahmenteile 29, 30 und 31 vom Innenwand-Randbereich 32 weg nach innen in Richtung mittlerer Innenwand-Randbereich abgezweigt.

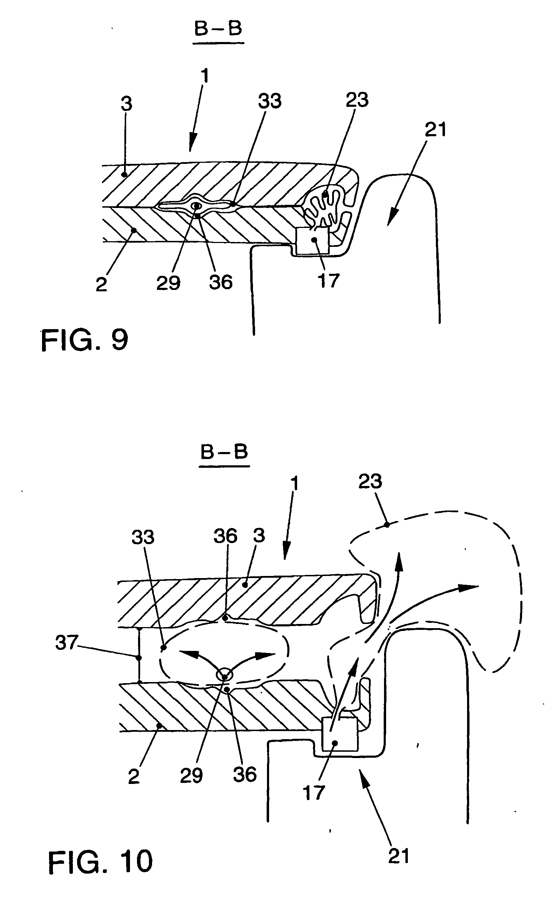

Diese Abzweigungsrahmenteile 29, 30, 31 sind Bestandteil des Versteifungsrahmens 17 und mit diesem strömungsverbunden. Wie dies insbesondere aus den Fig. 9 und 10 ersichtlich ist, die schematische Schnittansichten entlang der Linie B-B der Fig. 4 zeigen, sind diese sich hier in etwa in Fahrzeuglängsachsenrichtung erstreckenden Abzweigungsrahmenteile 29, 30, 31 jeweils von einem Anhebe-Airbag 33, 34, 35 ummantelt, wie dies in Fig. 9 anhand des Abzweigungsrahmenteils 29 und des Anhebe-Airbags 33 dargestellt ist. In diesem nicht aktivierten Grundzustand sind, wie dies ebenfalls beispielhaft für das Abzweigungsrahmenteil 29 und den Anhebe-Airbag 33 in der Fig. 9 dargestellt ist, die Abzweigungsrahmenteile 29, 30, 31 mit ihren zugeordneten Anhebe-Airbags 33, 34, 35 in entsprechend im Zwischenbereich zwischen der in einer Anlageverbindung an der Außenwand 3 anliegenden Innenwand ausgebildeten Aufnahmeräumen 36 aufgenommen, wobei ein Teil dieses Aufnahmeraums 36 hier beispielhaft in der Innenwand 2 und ein weiterer Teil in der Außenwand 3 entsprechend zugeordnet ausgebildet ist.

Im aktivierten Zustand wird über die Abzweigungsrahmenteile 29, 30, 31 des Versteifungsrahmens 17, wie dies in der Fig. 10 schematisch strichliert dargestellt ist, Gas in die entsprechend zugeordneten Anhebe-Airbags 33, 34, 35 eingeblasen, so dass die Außenwand 3 von der Innenwand 2 in der dargestellten Weise abgehoben wird. Gleichzeitig ist in der Fig. 9 und 10 auch die Strömungsverbindung des Fugenairbags 23 mit dem Versteifungsrahmen 17 im seitlichen Kotflügelbereich 21 schematisch dargestellt. Dieser Fugenairbag 23 kann, wie dies bereits zuvor erläutert worden ist, zum einen auch eine gewisse Anhebefunktion haben und die Außenwand 3 zusammen mit den Anhebe-Airbags 33, 34, 35 von der Innenwand 2 abheben. Hauptsächlich soll der in der Fig. 10 schematisch und strichliert eingezeichnete Fugenairbag 23 jedoch den seitlichen Haubenkantenbereich sowie den seitlichen Kotflügelbereich 21 abdecken.

In der Fig. 10 ist zudem beispielhaft und schematisch ein Haltemittel 37 in einer Doppelfunktion als Wegbegrenzer und Energieabsorptionsmittel schematisch dargestellt. Wie dies insbesondere aus der Fig. 4 ersichtlich ist, können diese Haltemittel 37 in regelmäßigen Abständen voneinander an der Fronthaube 1 im Bereich zwischen der Innenwand 2 und der Außenwand 3 angeordnet sein.

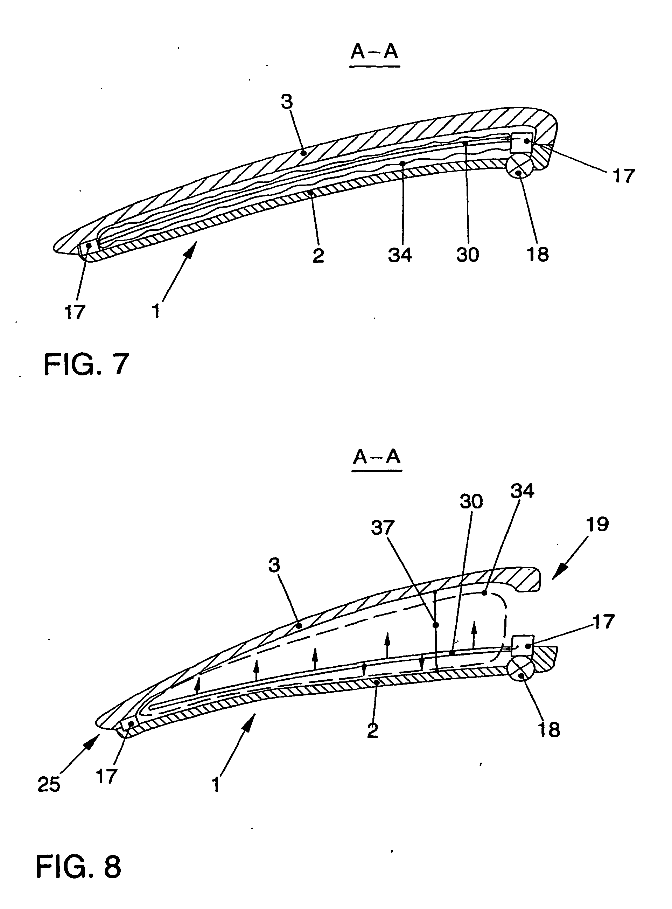

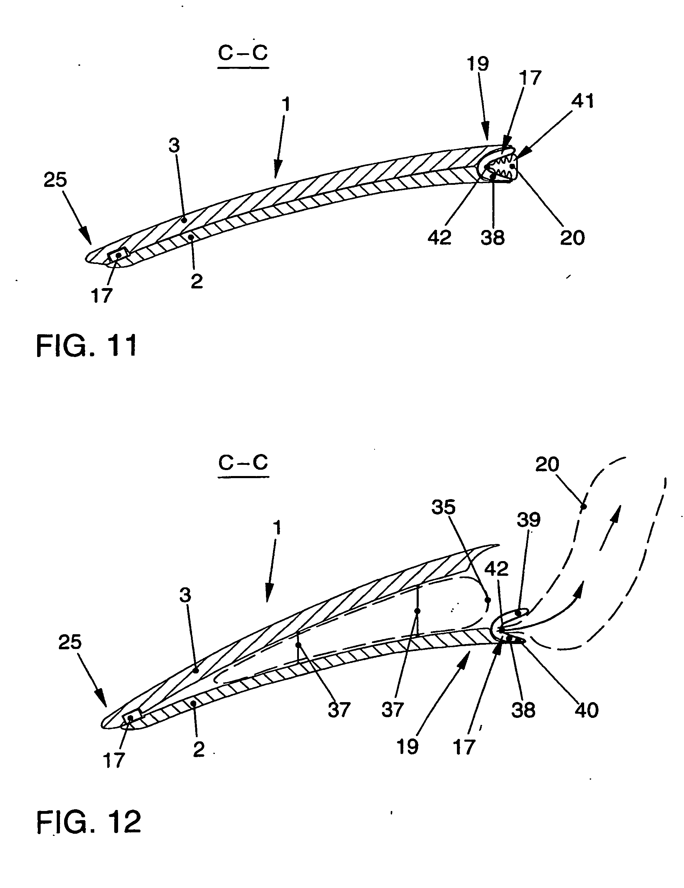

In den Fig. 7 und 8 sowie in den Fig. 11 und 12 sind jeweils Längsschnitte durch unterschiedliche Bereiche der Fronthaube 1 gezeigt, wobei die Fig. 7 und 11 jeweils den nicht aktivierten Grundzustand zeigen, während die Fig. 8 und 12 jeweils den abgehobenen Zustand der Außenwand 3 von der Innenwand 2 zeigen. Die Ummantelung der Abzweigungsrahmenteile 29, 30, 31 mit den Anhebe-Airbags 33, 34, 35 ist insbesondere aus der Fig. 7 nochmals anhand des Beispiels des Abzweigungsrahmenteils 30 und des Anhebe-Airbags 34 gezeigt. Wie dies aus der Fig. 8 ersichtlich ist, wird über den Versteifungsrahmen 17 Gas in das Abzweigungsrahmenteil 30 und von dort über entsprechende Ausströmöffnungen in den Anhebe-Airbag 34 geleitet. Für die in der Fig. 8 und auch in der Fig. 9 gezeigte Verschwenkung der Außenwand 3 bezüglich der Innenwand 2 sind die Geometrien der Anhebe-Airbags 33, 34, 35 keulenförmig ausgebildet mit dem dicken Ende im Bereich des hinteren Haubenkantenbereichs 19. Grundsätzlich können die Airbags jedoch auch um 90° versetzt, d. h. im Fahrzeugquerrichtung verlaufen, wie dies das Beispiel der Fig. 1 mit den Airbags 4 beispielhaft in Verbindung mit dem parallelen Abheben der Außenwand 3 zeigt.

Die Überströmöffnungen bzw. Ausströmöffnungen, d. h. insbesondere die Gasverbindung zwischen dem Versteifungsrahmen 17 mit den Abzweigungsrahmenteilen 29, 30, 31 zu den entsprechend zugeordneten Airbags ist hier jeweils nicht im Detail dargestellt, wobei jedoch so viele Ausströmöffnungen vorzusehen sind, wie dies für ein funktionssicheres Aufblasen der Airbags erforderlich ist.
Insbesondere aus der Fig. 11 ist zu ersehen, dass die Innenwand 2 und die Außenwand 3 in der nicht aktivierten Grundposition in einer Anlageverbindung aneinanderliegen, wobei die Innenwand 2 und die Außenwand 3 hier vorzugsweise noch zusätzlich z. B. miteinander verklebt werden können.

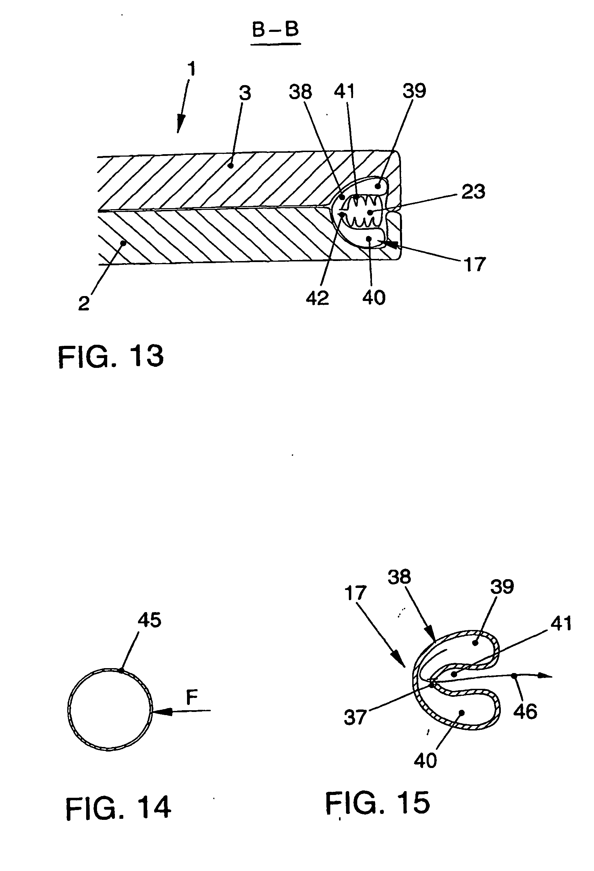

Wie dies den Fig. 11, 12 und auch der Fig. 13, die eine alternative Schnittansicht entlang der Linie B-B der Fig. 4 zeigt, entnommen werden kann, kann der Versteifungsrahmen 17 wenigstens bereichsweise mit einem im Querschnitt gesehen doppelwandigem U-Profil ausgebildet sein, mit einem von außen gesehen zwischen den U-Schenkeln 39, 40 liegenden Aufnahmeraum 41, in dem im nicht aktivierten Zustand der dem entsprechenden Versteifungsrahmenbereich zugeordnete Airbag zusammengefaltet aufgenommen werden kann. Im Beispiel der Fig. 11, 12 ist dies der Windschutzscheibenairbag 20, während im Beispiel der Fig. 13 der Fugenairbag 23 im Aufnahmeraum 41 aufgenommen ist.

Wie dies den Fig. 11, 12 und 13 weiter entnommen werden kann, ist der Aufnahmeraum 41 für eine vorteilhafte Airbagentfaltung jeweils in Airbagentfaltungsrichtung ausgerichtet an der Innenwand 2 angeordnet. Wie dies aus den Fig. 11, 12 und 13 weiter ersichtlich ist, ist jeweils im Bereich des Aufnahmeraums 41 eine Gasverbindung 42 zum jeweiligen Airbag 20, 23 vorgesehen, über den das im doppelwandigen U-Profil 38 des Versteifungsrahmens 17 geführte Gas in die Airbags 20, 23 einströmen kann, wie dies aus der Fig. 12 ersichtlich ist.

Der Versteifungsrahmen 17 ist dabei stets mit der Innenwand 2 verbunden, damit die Außenwand 3 einfach und ohne Komplikationen von dieser ohne zusätzlich damit verbundene Bauteile abgehoben werden kann.

In der Fig. 5 ist eine alternative Ausführungsform eines Versteifungsrahmens 43 gezeigt, bei dem lediglich der randseitig umlaufende Versteifungsrahmenbereich als Hohlprofil zur Gasführung ausgebildet ist. Ein beispielhaft V-förmiger mittlerer Versteifungsteil dient hier lediglich der Versteifung und nicht der Gasführung und ist somit zur Gasführung von dem randseitig umlaufenden Versteifungsrahmenteil abgekoppelt. Als Mittel zum Abheben der Außenwand können hier beispielsweise auch andere Maßnahmen außer Airbags vorgesehen sein, z. B. pyrotechnisch betätigbare Zylinder-Kolben-Einheiten, die hier nicht dargestellt sind und gleichzeitig z. B. auch Haltemittel mit einer Doppelfunktion als Energieabsorptionsmittel sein können.

### BEZUGSZEICHENLISTE

- 1.: Fronthaube
- 2.: Innenwand
- 3.: Außenwand
- 4.: Airbag
- 5.: Haltemittel
- 6.: Scharnieranordnung
- 7.: Aufnahmeraum
- 8.: Airbag
- 9.: Airbag
- 10.: Airbag
- 11.: Haltemittel
- 12.: Haltemittel
- 13.: Haltemittel
- 14.: seitlicher Fronthaubenbereich
- 15.: seitlicher Kotflügelbereich
- 16.: Fugenairbag
- 17.: Versteifungsrahmen
- 18.: Gasgenerator
- 19.: hinterer Haubenkantenbereich
- 20.: Windschutzscheibenairbag
- 21.: seitlicher Kotflügelbereich
- 22.: seitlicher Kotflügelbereich
- 23.: Fugenairbag
- 24.: Fugenairbag
- 25.: vorderer Haubenkantenbereich
- 26.: vorderer Haubenkantenairbag
- 27.: Windschutzscheibe
- 28.: Fahrzeugfrontend
- 29.: Abzweigungsrahmenteil
- 30.: Abzweigungsrahmenteil
- 31.: Abzweigungsrahmenteil
- 32.: Innenwand-Randbereich
- 33.: Anhebe-Airbag
- 34.: Anhebe-Airbag
- 35.: Anhebe-Airbag
- 36.: Aufnahmeraum
- 37.: Haltemittel
- 38.: doppelwandiges U-Profil
- 39.: U-Schenkel
- 40.: U-Schenkel
- 41.: Aufnahmeraum
- 42.: Gasverbindung
- 43.: Versteifungsrahmen
- 44.: Versteifungsrahmenteil
- 45.: Rohrabschnitt
- 46.: Pfeil
- 47.: Gasaustrittsöffnung
- 48.: Fronthaubenscharnier
- 49.: karosserieseitiges Scharnierteil
- 50.: fronthaubenseitiges Scharnierteil
- 51.: Sprengbolzen
- 52.: erste Viergelenkstrebe
- 53.: Verbindungsstrebe
- 54.: Schwenkpunkt
- 55.: zweite Viergelenkstrebe

## Patentansprüche

1. Energieabsorbierendes Karosserieteil, insbesondere Fronthaube, für ein Fahrzeug, insbesondere Kraftfahrzeug, das eine im montierten Zustand dem Fahrzeugaufbau zugewandte Innenwand (2) und eine mit dieser verbindbare Außenwand (3) als von außen sichtbare Sichtwand aufweist, wobei im Bereich zwischen der Innenwand (2) und der Außenwand (3) wenigstens ein Mittel vorgesehen ist, das die Außenwand (3) im Falle eines Aufpralls auf das Karosserieteil wenigstens bereichsweise von der Innenwand (2) weg in eine abgehobene Aufprallposition abhebt, wobei die Innenwand (2) mit einem randseitig wenigstens bereichsweise umlaufenden Versteifungsrahmen (17; 43) versteift ist, der wenigstens teilweise als Hohlprofil ausgebildet ist und im Hohlprofilbereich zur Gasführung einerseits mittelbar oder unmittelbar mit einer Gasquelle (18) und andererseits mittelbar oder unmittelbar mit wenigstens einem Airbag (4, 8, 9, 10, 20, 23, 24, 26, 33, 34, 35) strömungsverbunden ist.

2. Energieabsorbierendes Karosserieteil nach Anspruch 1, **dadurch gekennzeichnet,**
**dass** vom randseitigen Versteifungsrahmen (17) ausgehend wenigstens ein Abzweigungsrahmenteil als Bestandteil des Versteifungsrahmens (17) vom Innenwand-Randbereich (32) weg nach innen in Richtung mittlerer Innenwandbereich abgezweigt ist, und
**dass** das Abzweigungsrahmenteil (29, 30, 31) in der Art einer Gaslanze mit wenigstens einem Anhebe-Airbag (33, 34, 35) als Mittel zum Abheben der Außenwand (3) strömungsverbunden ist.

3. Energieabsorbierendes Karosserieteil nach Anspruch 2, **dadurch gekennzeichnet,**
**dass** mehrere in Längsrichtung und/oder Querrichtung über das Karosserieteil (1) verlaufende Abzweigungsrahmenteile (29, 30, 31) vom randseitigen Versteifungsrahmen (17) abgezweigt wird, die jeweils mit wenigstens einem Anhebe-Airbag (33, 34, 35) strömungsverbunden sind.

4. Energieabsorbierendes Karosserieteil nach Anspruch 2 oder 3, **dadurch gekennzeichnet,**
**dass** jedem Abzweigungsrahmenteil (29, 30, 31) jeweils ein Anhebe-Airbag (33, 34, 35) zugeordnet ist, der das Abzweigungsrahmenteil (29, 30, 31) ummantelt, und
**dass** am Abzweigungsrahmenteil (29, 30, 31) wenigstens eine Gasaustrittsöffnung vorgesehen ist, über die Gas in den entsprechend zugeordneten Anhebe-Airbag (33, 34, 35) einleitbar ist.

5. Energieabsorbierendes Karosserieteil nach einem der Ansprüche 2 bis 4, **dadurch gekennzeichnet,**
**dass** die Anhebe-Airbags (33, 34, 35) und entsprechend zugeordnet die Abzweigungsrahmenteile (29, 30, 31) so angeordnet und/oder ausgebildet sind, dass die Außenwand (3) parallel zur Innenwand (2) abhebbar ist oder dass die Außenwand (3) gegenüber der Innenwand (2) unter einem Schwenkwinkel verschwenkbar ist.

6. Energieabsorbierendes Karosserieteil nach einem der Ansprüche 2 bis 4, **dadurch gekennzeichnet,**
**dass** die Anhebe-Airbags (33, 34, 35) mitsamt zugeordnetem Abzweigungsrahmenteil (29, 30, 31) im montierten Zustand des Karosserieteils (1) in entsprechend im Zwischenbereich zwischen der Innenwand (2) und der Außenwand (3) ausgebildeten Aufnahmeräumen (36) aufgenommen sind.

7. Energieabsorbierendes Karosserieteil nach Anspruch 6, **dadurch gekennzeichnet,**
**dass** der wenigstens eine Aufnahmeraum (36) in der Innenwand ausgebildet ist.

8. Energieabsorbierendes Karosserieteil nach einem der Ansprüche 1 bis 7, **dadurch gekennzeichnet,**
**dass** das Karosserieteil eine Fronthaube (1) eines Kraftfahrzeuges ist.

9. Energieabsorbierendes Karosserieteil nach Anspruch 8, **dadurch gekennzeichnet,**
**dass** einem einer Windschutzscheibe (27) zugewandten Rahmenbereich des Versteifungsrahmens (17) wenigstens ein Windschutzscheibenairbag (20) zugeordnet ist, der im aktivierten Zustand über den Versteifungsrahmen (17) wenigstens bereichsweise vor der Windschutzscheibe (27) aufblasbar ist.

10. Energieabsorbierendes Karosserieteil nach Anspruch 8, **dadurch gekennzeichnet,**
**dass** einem einem Kotflügel (15; 21, 22) zugewandten Rahmenbereich des Versteifungsrahmens (17) wenigstens ein Fugenairbag (16; 23, 24) zugeordnet ist, der im aktivierten Zustand über den Versteifungsrahmen (17) wenigstens bereichsweise im Kotflügelbereich (15; 21, 22) aufblasbar ist.

11. Energieabsorbierendes Karosserieteil nach Anspruch 8, **dadurch gekennzeichnet,**
**dass** einem einem Fahrzeugfrontend (28) zugewandten Rahmenbereich des Versteifungsrahmens (17) wenigstens ein vorderer Haubenkantenairbag (26) zugeordnet ist, der im aktivierten Zustand über den Versteifungsrahmen (17) wenigstens bereichsweise im Fahrzeugfrontendbereich aufblasbar ist.

12. Energieabsorbierendes Karosserieteil nach einem der Ansprüche 9 bis 11, **dadurch gekennzeichnet,**
**dass** wenigstens ein ein- oder mehrstufiger Gasgenerator (18) als Gasquelle vorgesehen ist, über den der Versteifungsrahmen (17) und damit der oder die Airbags (20, 23, 24, 26, 33, 34, 35) mit Gas beaufschlagbar ist.

13. Energieabsorbierendes Karosserieteil nach Anspruch 12, **dadurch gekennzeichnet,**
**dass** der wenigstens eine Gasgenerator (18) am Versteifungsrahmen (17) und/oder an der Innenwand (2) festgelegt ist.

14. Energieabsorbierendes Karosserieteil nach einem der Ansprüche 1 bis 13, **dadurch gekennzeichnet,**
**dass** der Versteifungsrahmen (17) wenigstens bereichsweise ein im Querschnitt gesehen doppelwandiges U-Profil (38) mit einem von außen gesehen zwischen den U-Schenkeln (39, 40) liegenden Aufnahmeraum (41) aufweist, in dem ein Airbag (20, 23) im zusammengefalteten Zustand aufnehmbar ist, und
**dass** im Bereich des Aufnahmeraums (41) wenigstens eine Gasverbindung (42) zum Airbag (20, 23) zu dessen Gasbefüllung vorgesehen ist.

15. Energieabsorbierendes Karosserieteil nach Anspruch 14, **dadurch gekennzeichnet,**
**dass** der Aufnahmeraum (41) in Airbagentfaltungsrichtung ausgerichtet ist.

16. Energieabsorbierendes Karosserieteil nach einem der Ansprüche 1 bis 15, **dadurch gekennzeichnet,**
**dass** die Innenwand (2) und die Außenwand (3) im montierten Zustand wenigstens bereichsweise in einer Anlageverbindung aneinander anliegen.

17. Energieabsorbierendes Karosserieteil nach Anspruch 16, **dadurch gekennzeichnet,**
**dass** die Innenwand (2) und die Außenwand (3) wenigstens bereichsweise miteinander verklebt sind.

18. Energieabsorbierendes Karosserieteil nach einem der Ansprüche 1 bis 17, **dadurch gekennzeichnet,**
**dass** die Außenwand (3) und/oder die Innenwand (2) wenigstens bereichsweise aus Kunststoff und/oder Metall hergestellt ist.

19. Energieabsorbierendes Karosserieteil nach einem der Ansprüche 1 bis 19, **dadurch gekennzeichnet,**
**dass** die Auslösung der Mittel zum Anheben der Außenwand und/oder der Gasquelle sensorgesteuert mittels einer Sensoreinrichtung erfolgt, vorzugsweise einer pre-crash-Sensoreinrichtung.

## Claims

1. Energy-absorbing body part, especially bonnet, for a vehicle, in particular motor vehicle, which has an inner wall (2) which, in the fitted state, faces the vehicle body, and an outer wall (3) which can be connected to the inner wall as a visible wall which is visible from the outside, with at least one means being provided in the region between the inner wall (2) and the outer wall (3), which means, in the event of an impact on the body part, raises the outer wall (3) at least in some regions away from the inner wall (2) into a raised impact position, the inner wall (2) being stiffened with a stiffening frame (17; 43) which encircles it on the edge side at least in some regions, is at least partially designed as a hollow profile and, in the region of the hollow profile, is connected in terms of flow indirectly or directly to a gas source (18), in order to conduct gas, on the one hand, and indirectly or directly to at least one airbag (4, 8, 9, 10, 20, 23, 24, 26, 33, 34, 35), on the other hand.

2. Energy-absorbing body part according to Claim 1, **characterized in that**, starting from the edge-side stiffening frame (17), at least one branching-off frame part is branched off, as part of the stiffening frame (17), away from the inner wall edge region (32) inwards in the direction of the central inner wall region, and **in that** the branching-off frame part (29, 30, 31) is connected in terms of flow in the manner of a gas lance to at least one raising airbag (33, 34, 35) as means for raising the outer wall (3).

3. Energy-absorbing body part according to Claim 2, **characterized in that** a plurality of branching-off frame parts (29, 30, 31) is branched off from the edge-side stiffening frame (17), which branching-off frame parts run in the longitudinal direction and/or transverse direction over the body part (1) and are connected in terms of flow in each case to at least one raising airbag (33, 34, 35).

4. Energy-absorbing body part according to Claim 2 or 3, **characterized in that** each branching-off frame part (29, 30, 31) is in each case assigned a raising airbag (33, 34, 35) which encases the branching-off frame part (29, 30, 31), and **in that** at least one gas outlet opening is provided on the branching-off frame part (29, 30, 31), via which gas can be introduced into the correspondingly associated raising airbag (33, 34, 35).

5. Energy-absorbing body part according to one of Claims 2 to 4, **characterized in that** the raising airbags (33, 34, 35) and, correspondingly assigned, the branching-off frame parts (29, 30, 31) are arranged and/or designed in such a manner that the outer wall (3) can be raised parallel to the inner wall (2) or that the outer wall (3) can be pivoted in relation to the inner wall (2) at a pivoting angle.

6. Energy-absorbing body part according to one of Claims 2 to 4, **characterized in that** the raising airbags (33, 34, 35) together with assigned branching-off frame part (29, 30, 31), in the fitted state of the body part (1), are accommodated in receiving spaces (36), correspondingly formed in the intermediate region between the inner wall (2) and the outer wall (3).

7. Energy-absorbing body part according to Claim 6, **characterized in that** the at least one receiving space (36) is formed in the inner wall.

8. Energy-absorbing body part according to one of Claims 1 to 7, **characterized in that** the body part is a bonnet (1) of a motor vehicle.

9. Energy-absorbing body part according to Claim 8, **characterized in that** a frame region of the stiffening frame (17), which region faces a windscreen (27), is assigned at least one windscreen airbag (20) which, in the activated state, can be inflated at least in some regions in front of the windscreen (27) via the stiffening frame (17).

10. Energy-absorbing body part according to Claim 8, **characterized in that** a frame region of the stiffening frame (17), which region faces a wing (15; 21, 22), is assigned at least one gap-filling airbag (16; 23, 24) which, in the activated state, can be inflated at least in some regions in the wing region (15; 21, 22) via the stiffening frame (17).

11. Energy-absorbing body part according to Claim 8, **characterized in that** a frame region of the stiffening frame (17), which region faces a vehicle front end (28), is assigned at least one front bonnet edge airbag (26) which, in the activated state, can be inflated at least in some regions in the vehicle front end region via the stiffening frame (17).

12. Energy-absorbing body part according to one of Claims 9 to 11, **characterized in that** at least one single- or multi-stage gas generator (18) is provided as gas source via which the stiffening frame (17) and therefore the airbag or the airbags (20, 23, 24, 26, 33, 34, 35) can be charged with gas.

13. Energy-absorbing body part according to Claim 12, **characterized in that** the at least one gas generator (18) is secured on the stiffening frame (17) and/or on the inner wall (2).

14. Energy-absorbing body part according to one of Claims 1 to 13, **characterized in that** the stiffening frame (17) has at least in some regions a double-walled U-profile (38), as seen in cross section, with a receiving space (41) which is situated, as seen from the outside, between the U-limbs (39, 40) and in which an airbag (20, 23) can be accommodated in the collapsed state, and **in that** at least one gas connection (42) to the airbag (20, 23) for filling it with gas is provided in the region of the receiving space (41).

15. Energy-absorbing body part according to Claim 14, **characterized in that** the receiving space (41) is oriented in the airbag deployment direction.

16. Energy-absorbing body part according to one of Claims 1 to 15, **characterized in that** the inner wall (2) and the outer wall (3), in the fitted state, bear against each other in a bearing connection, at least in some regions.

17. Energy-absorbing body part according to Claim 16, **characterized in that** the inner wall (2) and the outer wall (3) are bonded to each other at least in some regions.

18. Energy-absorbing body part according to one of Claims 1 to 17, **characterized in that** the outer wall (3) and/or the inner wall (2) is/are produced from plastic and/or metal at least in some regions.

19. Energy-absorbing body part according to one of Claims 1 to 18, **characterized in that** the releasing of the means for raising the outer wall and/or the gas source takes place under sensor control by means of a sensor device, preferably a pre-crash sensor device.

## Revendications

1. Pièce de carrosserie à absorption d'énergie, en particulier capot, pour un véhicule, notamment un véhicule automobile, qui présente une paroi interne (2) tournée vers la carrosserie du véhicule dans l'état monté et une paroi externe (3) pouvant être connectée à celle-ci, servant de paroi visible, visible de l'extérieur, au moins un moyen étant prévu dans la région entre la paroi interne (2) et la paroi externe (3), lequel soulève la paroi externe (3), en cas de collision de la pièce de carrosserie, au moins en partie à l'écart dé la paroi interne (2) dans une position de collision soulevée, la paroi interne (2) étant rigidifiée avec un cadre de renforcement (17 ; 43) au niveau du bord, au moins partiellement périphérique, qui est réalisé au moins partiellement sous forme de profilé creux et qui est relié fluidiquement dans la région du profilé creux pour le guidage de gaz d'une part de façon directe ou indirecte à une source de gaz (18) et d'autre part, de façon directe ou indirecte à au moins un airbag (4, 8, 9, 10, 20, 23, 24, 26, 33, 34, 35).

2. Pièce de carrosserie à absorption d'énergie selon la revendication 1, **caractérisée en ce que** depuis le cadre de renforcement (17) au niveau du bord, au moins une partie de cadre de dérivation servant de constituant du cadre de renforcement (17) est déviée à l'écart de la région du bord de la paroi interne (32) vers l'intérieur dans la direction de la région du centre de la paroi interne, et
**en ce que** la partie de cadre de dérivation (29, 30, 31) est reliée fluidiquement à la manière d'une lance à gaz à au moins un airbag de soulèvement (33, 34, 35) servant de moyen pour soulever la paroi externe (3).

3. Pièce de carrosserie à absorption d'énergie selon la revendication 2, **caractérisée en ce que**
plusieurs parties de cadre de dérivation (29, 30, 31) s'étendant dans la direction longitudinale et/ou dans la direction transversale sur la pièce de carrosserie (1) sont déviées du cadre de renforcement (17) au niveau du bord, et sont reliées fluidiquement à chaque fois à au moins un airbag de soulèvement (33, 34, 35).

4. Pièce de carrosserie à absorption d'énergie selon la revendication 2 ou 3, **caractérisée en ce qu'**un airbag de soulèvement respectif (33, 34, 35), qui enveloppe la partie de cadre de dérivation (29, 30, 31), est associé à chaque partie de cadre de dérivation (29, 30, 31) et
**en ce qu'**au moins une ouverture de sortie de gaz est prévue sur la partie de cadre de dérivation (29, 30, 31), par le biais de laquelle du gaz peut être introduit dans l'airbag de soulèvement associé correspondant (33, 34, 35).

5. Pièce de carrosserie à absorption d'énergie selon l'une quelconque des revendications 2 à 4, **caractérisée en ce que**
les airbags de soulèvement (33, 34, 35) et les parties de cadre de dérivation (29, 30, 31) associées en conséquence sont disposés et/ou réalisés de telle sorte que la paroi externe (3) puisse être soulevée parallèlement à la paroi interne (2) ou que la paroi externe (3) puisse être pivotée par rapport à la paroi interne (2) suivant un angle de pivotement.

6. Pièce de carrosserie à absorption d'énergie selon l'une quelconque des revendications 2 à 4, **caractérisée en ce que**
les airbags de soulèvement (33, 34, 35) conjointement avec la partie de cadre de dérivation associée (29, 30, 31) sont reçus dans l'état monté de la pièce de carrosserie (1) dans des espaces de réception (36) réalisés de manière correspondante dans la région intermédiaire entre la paroi interne (2) et la paroi externe (3).

7. Pièce de carrosserie à absorption d'énergie selon la revendication 6, **caractérisée en ce que**
l'au moins un espace de réception (36) est réalisé dans la paroi interne.

8. Pièce de carrosserie à absorption d'énergie selon l'une quelconque des revendications 1 à 7, **caractérisée en ce que**
la pièce de carrosserie est un capot (1) d'un véhicule automobile.

9. Pièce de carrosserie à absorption d'énergie selon la revendication 8, **caractérisée en ce que**
l'on associe à une région de cadre du cadre de renforcement (17) tournée vers un pare-brise (27) au moins un airbag de pare-brise (20), qui peut être gonflé dans l'état activé sur le cadre de renforcement (17) au moins en partie devant le pare-brise (27).

10. Pièce de carrosserie à absorption d'énergie selon la revendication 8, **caractérisée en ce que**
l'on associe à une région de cadre du cadre de renforcement (17) tournée vers une aile (15 ; 21, 22) au moins un airbag de joint (16 ; 23, 24) qui peut être gonflé dans l'état activé sur le cadre de renforcement (17) au moins en partie dans la région de l'aile (15 ; 21, 22).

11. Pièce de carrosserie à absorption d'énergie selon la revendication 8, **caractérisée en ce que**
l'on associe à une région de cadre du cadre de renforcement (17) tournée vers une extrémité avant du véhicule (28) au moins un airbag avant de bord de capot (26) qui peut être gonflé dans l'état activé sur le cadre de renforcement (17) au moins en partie dans la région de l'extrémité avant du véhicule.

12. Pièce de carrosserie à absorption d'énergie selon l'une quelconque des revendications 9 à 11, **caractérisée en ce que**
au moins un générateur de gaz (18) à un ou plusieurs étages est prévu comme source de gaz, par le biais duquel le cadre de renforcement (17) et de ce fait le ou les airbags (20, 23, 24, 26, 33, 34, 35) peuvent être sollicités avec du gaz.

13. Pièce de carrosserie à absorption d'énergie selon la revendication 12, **caractérisée en ce que**
l'au moins un générateur de gaz (18) est fixé sur le cadre de renforcement (17) et/ou sur la paroi interne (2).

14. Pièce de carrosserie à absorption d'énergie selon l'une quelconque des revendications 1 à 13, **caractérisée en ce que**
le cadre de renforcement (17) présente au moins en partie, vu en section transversale, un profilé en U à double paroi (38) avec un espace de logement (41), vu depuis l'extérieur, situé entre les branches du U (39, 40), dans lequel un airbag (20, 23) peut être reçu dans l'état replié, et
**en ce que** l'on prévoit dans la région de l'espace de logement (41) au moins une connexion de gaz (42) pour l'airbag (20, 23) en vue de son remplissage avec du gaz.

15. Pièce de carrosserie à absorption d'énergie selon la revendication 14, **caractérisée en ce que**
l'espacé de logement (41) est orienté dans la direction de déploiement de l'airbag.

16. Pièce de carrosserie à absorption d'énergie selon l'une quelconque des revendications 1 à 15, **caractérisée en ce que**
la paroi interne (2) et la paroi externe (3) s'appliquent l'une contre l'autre dans l'état monté au moins en partie en liaison d'appui.

17. Pièce de carrosserie à absorption d'énergie selon la revendication 16, **caractérisée en ce que**
la paroi interne (2) et la paroi externe (3) sont au moins en partie collées l'une à l'autre.

18. Pièce de carrosserie à absorption d'énergie selon l'une quelconque des revendications 1 à 17, **caractérisée en ce que**
la paroi externe (3) et/ou la paroi interne (2) sont fabriquées au moins en partie en plastique et/ou en métal.

19. Pièce de carrosserie à absorption d'énergie selon l'une quelconque des revendications 1 à 19, **caractérisée en ce que**
le déclenchement des moyens pour soulever la paroi externe et/ou la source de gaz s'effectue par commande par capteur au moyen d'un dispositif de capteur, de préférence un dispositif de capteur d'anticipation de collision.
